# EUROPEAN PATENT APPLICATION

(11) **EP 0 550 188 A2**
(43) Date of publication of application: **07.07.1993**
(21) Application number: 92311360.9
(22) Date of filing: 11.12.1992
(51) Int. Cl.: G06F 7/552

(54) **Arithmetic system for performing integer power calculations**

(30) Priority: 31.12.1991 US 807305
(71) Applicant: International Business Machines Corporation, Armonk, N.Y. 10504 (US)
(72) Inventor: Karim, Faraydon Osman, Round Rock, Texas 78681 (US)
(74) Representative: Burt, Roger James, Dr.

(57) **Abstract**

The present invention relates to an arithmetic system for performing integer power calculations comprising a first register (10) for storing power data, a second register (48) for storing integer data, an arithmetic unit, and a controller for controlling the operation of the arithmetic unit.

According to the invention the arithmetic system is characterised in that the arithmetic unit comprises a third register (46), a multiplier (54), and connection means connecting together the second register, the third register and the multiplier. The arithmetic system is further characterised in that the controller comprises means for entering an initial value into the third register, means (12) for removing data from a selected position in the first register and determining whether the value of the removed data satisfies a predetermined requirement, means (20) for controlling the multiplier to perform the multiplication operation of, firstly, if the value of the data removed from the first register satisfies the predetermined requirement, multiplying the content of the second register with the content of the third register and storing the result in the third register, and, secondly, multiplying the content of the second register with itself and storing the result in the second register, and means for repeating the multiplication operation until all the power data has been removed from the first register and the third register contains the result of the integer power calculation.

## Description

The present invention relates generally to data processing systems and, more specifically, to an arithmetic system that performs integer power calculations. An integer power calculation calculates the value of an integer N raised to the power P (i.e. N^{P}). The number P is termed "the exponent" and the integer N is sometimes termed "the base".

Integer power calculations are often required in data processing systems. Commonly, the performance of the integer power calculation is accomplished by using the existing arithmetic circuitry that traditionally just performs additions and subtractions. In these traditional arithmetic functional units, algorithms are performed in software to perform a multiplication operation by performing a series of additions. Multiple multiplication operations are performed to perform the integer power calculation. More recent data processing systems include special purpose arithmetic units. Some special purpose arithmetic units include multiplier circuitry. Integer power calculations are accomplished with the multiplier circuit by repetitively multiplying a base number itself in accordance with the exponent.

However, recent systems have included circuitry especially dedicated to performing integer power calculations. SU -A- 1179327 entitled, "Digital Data-Processing Exponential Function Generator has Computing Unit Outputs From Base and Exponent Registers to AND-GATES and OR-GATES With Output-to-Output Multipliers", discloses an exponential functional circuit where the exponent, in binary form, controls multiplication of the base.

SU -A- 1246092 entitled, "Digital Computing Powering APPTS has Exponent Coder Controlling Passage of Conjunctions From Argument Digital Product Coders to Output Adder", discloses an arithmetic circuit include an adder and a multiplier.

IBM Technical Disclosure Bulletin, Vol. 14, No. 1, June, 1971, pp. 328-330, entitled "Efficient Arithmetic Apparatus and Method", discloses an arithmetic circuit that performs exponential logarithmic quotient and square root functions.

IBM Technical Disclosure Bulletin, Vol. 25, No. 1, June, 1982, pp. 171-173, entitled "Exponential by Sequential Squaring", discloses an algorithm for performing exponential operations.

US -A- 4,225,933, entitled "Exponential Function Computing Apparatus", discloses a data shifting and adding circuit to perform exponential functions.

US -A- 4,229,801, entitled "Floating Point Processor Having Concurrent Exponent/Mantissa Operation", discloses an arithmetic unit that performs exponent/sign related calculations concurrently with mantissa related operations in floating point arithmetic.

US -A- 4,410,956, entitled "Exponential Operation Device", discloses an exponential arithmetic circuit that determines whether the base parameter is positive or negative and whether the exponential parameter is an integer.

US -A- 4,758,975, entitled "Data Processor Capable of Processing Floating Point Data With Exponent Part of Fixed or Variable Length", discloses a data processor with a latch for latching in a floating point register floating point exponent data.

DE -A- 3931545, entitled "Floating Point Processor - has Adder Subtracter Handling Exponent Part for Improved Execution of Multiplication and Division", provides circuitry to perform multiplication and division in addition to addition and subtraction.

IBM Technical Disclosure Bulletin, Vol. 32, No. 7, December, 1989, pp. 222-223, entitled "16-Bit Floating-Point Math in an 8-Bit Microprocessor", discloses a program that performs a 16-bit floating point mathematical operation with a signed 8-bit exponent in an 8-bit microprocessor.

IBM Technical Disclosure Bulletin, Vol. 33, No. 1B, June, 1990, pp. 312-313, entitled "Exponent Shift Count Logic", discloses a circuit for performing exponent operations including an adder and shifter.

The object of the present invention is to provide an improved arithmetic system for performing integer power calculations.

The present invention relates to an arithmetic system for performing integer power calculations comprising a first register for storing power data, a second register for storing integer data, an arithmetic unit, and a controller for controlling the operation of the arithmetic unit.

According to the invention the arithmetic system is characterised in that the arithmetic unit comprises a third register, a multiplier, and connection means connecting together the second register, the third register and the multiplier. The arithmetic system is further characterised in that the controller comprises means for entering an initial value into the third register, means for removing data from a selected position in the first register and determining whether the value of the removed data satisfies a predetermined requirement, means for controlling the multiplier to perform the multiplication operation of, firstly, if the value of the data removed from the first register satisfies the predetermined requirement, multiplying the content of the second register with the content of the third register and storing the result in the third register, and, secondly, multiplying the content of the second register with itself and storing the result in the second register, and means for repeating the multiplication operation until all the power data has been removed from the first register and the third register contains the result of the integer power calculation.

In order that the invention may be more readily understood an embodiment will now be described with reference to the accompanying drawings, in which:-
Fig. 1 is a block diagram of the integer power circuit,
Fig. 2 is a flow chart illustrating the operation of the controller circuit in Fig. 1, and
Fig. 3 is an example of the operation of the circuitry in Fig. 1.

The embodiment to be described is an integer power arithmetic system that performs integer power calculations very quickly in a hardware implementation.

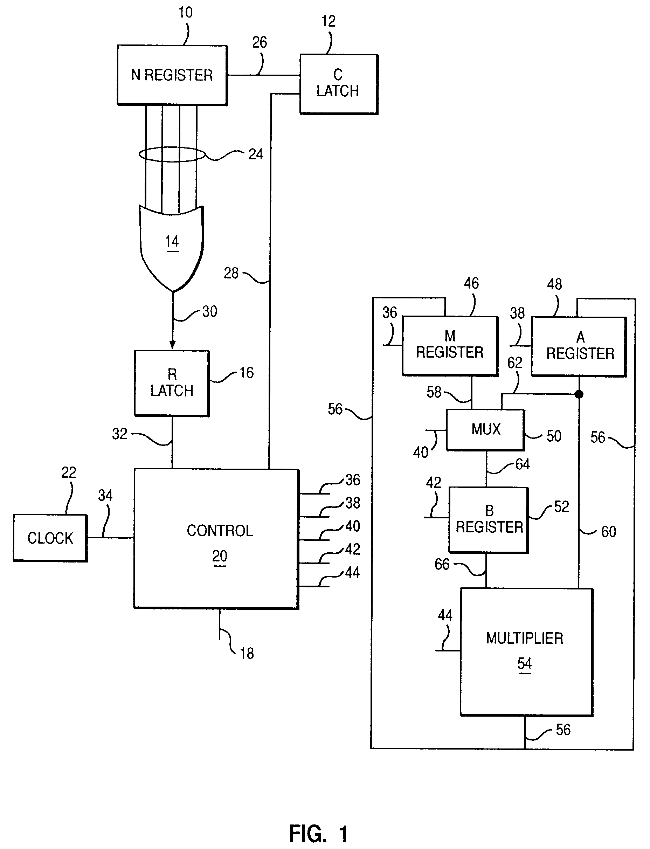

Fig. 1 is a block diagram of the arithmetic system. An N register 10 initially contains in binary form the value of the power to be used in an integer power calculation. N register 10 is a shift register that iteratively shifts its content to the right so that, one bit at a time is fed out of the register along line 26 into a C latch 12. Also, the content of N register 10 (each individual bit of the N register) is ORed through lines 24 and OR-GATE 14 to provide an output on line 30 to an R latch 16. As bits are shifted right out of N register 10, 0's are inserted to replace the vacated binary positions. C latch 12 provides an input to a control circuit 20 by line 28. Also, R latch 16 provides an input to control 20 by line 32. Clock circuit 22 provides a clock input on line 34 into control circuit 20.

Control circuit 20, via lines 36, 38, 40, 42 and 44, controls the data flow through a multiplier 54. Specifically, an M register 46 is used together with an A register 48 to perform the integer power calculation in accordance with the signals on the control lines 36, 38, 40, 42 and 44 from control circuit 20.

A multiplexer 50 under the control of control circuit 20 can supply to the B register via line 64 either the content of the M register 46 through line 58 or the content of the A register 48 through line 62. The output of the B register is connected to the multiplier 54 by line 66. Similarly, the output of the A register 48 is connected to the multiplier 54 by line 60. The output of the multiplier 54 is placed on line 56 and is provided to either the A register 48 or the M register 46 under the control of the control circuit 20. In other words, the control circuit 20 controls the data that is input into the M register 46 and A register 48.

Initially, the M register 46 contains a decimal "1". The A register 48 initially contains the base value (the integer to be used in the integer power calculation). Under the control of the control circuit 20 the content of the M register 46 is loaded through the multiplexer 50 into the B register 52 and then multiplied in multiplier 54 by the content of the A register 48. Also under the control of control circuit 20, the content of the A register 48 is loaded through the multiplexer 50 into the B register 52 and then multiplied by itself (the content of the A register 48) in the multiplier 54.

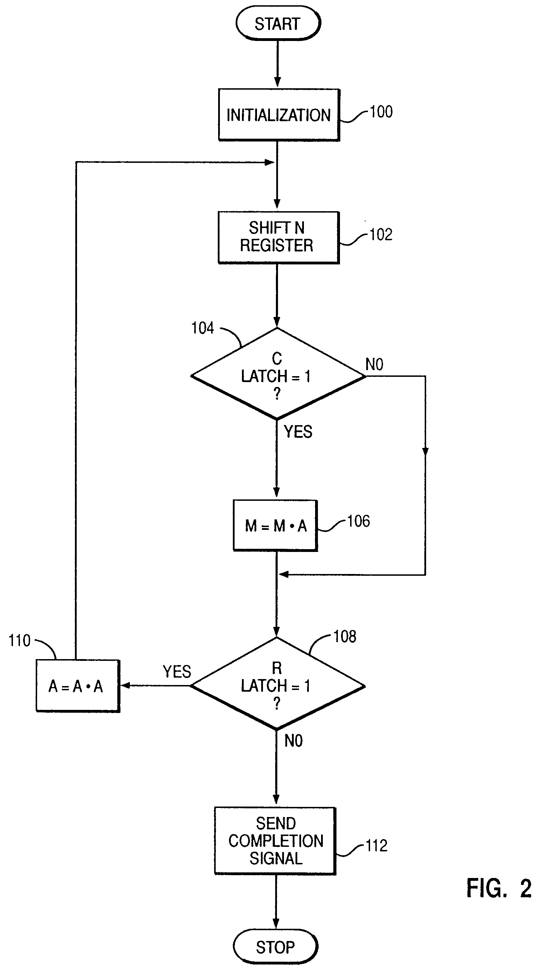

Fig. 2 illustrates in flow chart form the operation of the control circuit 20 together with the remaining circuitry of the integer power arithmetic circuit. Step 100 is the initialisation step. In step 100, the exponent in binary form is loaded into the N register 10 and the base value (the integer) is loaded into A register 48. A decimal "1" is initially placed in the M register 46. In step 102, the content of the N register 10 is shifted one bit position to the right with the right hand bit being shifted out. The bit that is shifted out of N register 10 is placed into C latch 12. In step 104, if the C latch content is a binary "1", then the content of M register 46 is multiplied by the content of the A register 48. This is accomplished in step 106.

Step 106 is performed by loading the content of the M register 46 over line 58, through the multiplexer 50 and over line 64 into the B register 52. Then multiplier 54 multiplies the contents of the B register 52 from line 66 with the contents of the A register 48 from line 60. The output of the multiplier 54 is provided on line 56 back to the M register 46. The operation then proceeds to step 108. If the C latch content is binary 0 (step 104), the operation proceeds directly to step 108 as shown.

In step 108, the controller determines if the contents of the R latch is a binary 1. If the content is a 1, then the A register is multiplied by itself in the multiplier 54. Specifically, this is accomplished by providing the contents of the A register 48 along line 62 through the multiplexer 50 and line 64 into the B register 52. Then the content of the A register 48 supplied on line 60 is multiplied with the contents of the B register 52 (which is the content of the A register 48) supplied on line 66 through the multiplier circuit 54. The result of this multiplication operation is placed on line 56 and returned to the A register 48. When step 110 is completed, the operation returns to step 102 to shift the content of the N register.

Returning to step 108, if the content of the R latch is 0, then the operation proceeds directly to step 112. At this point, a completion signal is sent from the control circuit on line 18.

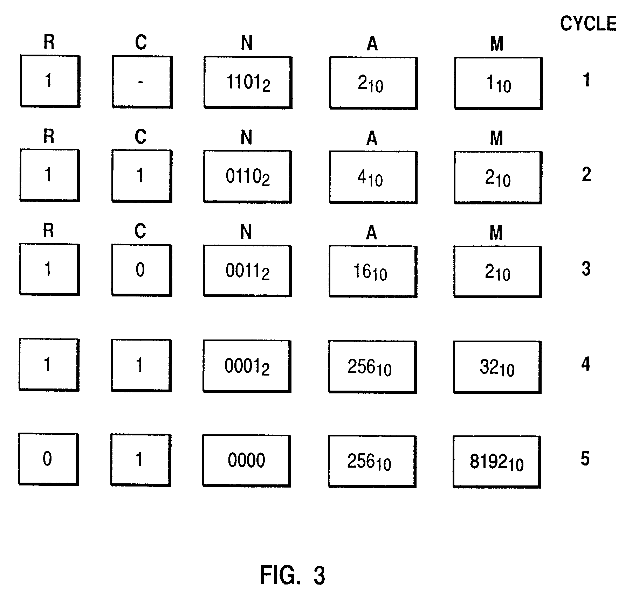

A simple numeric example of how the circuitry in Fig. 1 functions may be helpful. This example is the computation of 2¹³ (integer 2 to the power 13). This numerical example is illustrated in Fig. 3. Referring to Fig. 3, cycle 1 is the initialisation cycle. During this cycle, the N register 10 is loaded with the exponent 13 in binary form (1101). The subscript 2 used in Fig. 3 denotes that the 1101 is binary form. The content of the N register 10 will be illustrated in binary form. The contents of the other registers will be illustrated in decimal form. In this example, the base value is 2₁₀, which is loaded in the A register 48 (note that the subscript 10 in Fig. 3 denotes decimal notation). A decimal "1" is loaded into the M register 46. The ORed contents of the binary positions of the N register 10 provides a 1 which becomes the content of the R latch 16 as illustrated. The C latch 12 is a "don't care" since this is an initialisation cycle.

In cycle 2, the content of the N register 10 is shifted one bit position to the right. The vacant bit position on the left is filled with a 0. The bit that is shifted out is a 1 and is placed in the C latch 12. According to the operation illustrated in Fig. 2, since the C latch 12 contains a 1 the content of the M register 46 is multiplied by the content of the A register 48 and stored back into the M register 46. This results in a 2 being stored in the M register. Since the content of the R latch 16 is still a 1, the content of the A register 48 is multiplied by itself and stored back into the A register 48. Therefore, the content of the A register 48 now becomes 4.

In cycle 3, the content of the N register 10 is again shifted one bit to the right with a 0 shifted out. This time, the content of the C latch 12 becomes a 0. Accordingly, the content of the M register 46 does not change. Since at least one 1 is contained in the N register 10, the content of the R latch 16 is again 1. Therefore, the content of the A register 48 is multiplied by itself and stored back into the A register 48. This results in a 16 being stored in the A register 48.

In cycle 4, the content of the N register 10 is again shifted by one. This time a 1 is placed in the C latch 12. As a result, the content of the M register 46 is multiplied by the content of the A register 48 and the result is placed back into the M register 46. Therefore, a 32 is stored in the M register 46. Since the content of the R latch 16 is again a 1, the content of the A register 48 is multiplied by itself and placed back into the A register 48. This results in 256 being stored into the A register 48.

In cycle 5, the content of the N register 10 is again shifted one position to the right. This results in a 1 in the C latch 12 and the content of the M register 46 is again multiplied by the content of the A register 48 resulting in 8,192 being stored into the M register 46. Since the content of the N register is all 0's, the content of the R latch 16 will be a 0. Therefore, the control circuit 20 will send a completion signal on line 18. The results of the integer power calculation is located in the M register 46 and is 8,192.

If the integer power binary representation in the N register does not have 1's in the most significant bit positions, the controller 20 will indicate operation completion on line 18 as soon as N register 10 is all 0's or is in a null state. This results in the operation completion indication being provided before all bit positions in the N register 10 have been shifted since all required multiplications will have been completed.

## Claims

1. An arithmetic system for performing integer power calculations comprising
a first register (10) for storing power data, a second register (48) for storing integer data, an arithmetic unit, and a controller for controlling the operation of said arithmetic unit,
characterised in that
said arithmetic unit comprises a third register (46), a multiplier (54), and connection means connecting together said second register, said third register and said multiplier,
and in that
said controller comprises
means for entering an initial value into said third register,
means (12) for removing data from a selected position in said first register and determining whether the value of said removed data satisfies a predetermined requirement,
means (20) for controlling said multiplier to perform the multiplication operation of, firstly, if the value of said data removed from said first register satisfies said predetermined requirement, multiplying the content of said second register with the content of said third register and storing the result in said third register, and, secondly, multiplying the content of said second register with itself and storing the result in said second register, and
means for repeating said multiplication operation until all the power data has been removed from said first register and said third register contains the result of said integer power calculation.

2. An arithmetic system as claimed in Claim 1 characterised in that said means for removing data from said first register removes the data from the least significant digit position of the register and moves the data in the next most significant digit position into said least significant digit position.

3. An arithmetic system as claimed in Claim 2 characterised in that said power data is stored in said first register in binary form and in that said predetermined requirement is that the value is "1".
